# EUROPEAN PATENT APPLICATION

(11) **EP 4 224 939 A1**
(43) Date of publication of application: **09.08.2023**
(21) Application number: 23164038.4
(22) Date of filing: 18.06.2019
(51) Int. Cl.: H04W 40/22, H04W 40/04, H04L 45/302

(54) **ROUTE SELECTION AND QOS SUPPORT IN A WIRELESS ACCESS NETWORK**

(30) Priority: 21.06.2018 GB 201810225
(62) Divisional of application: 19823513.7
(71) Applicant: JRD Communication (Shenzhen) Ltd, Shenzhen, Guangdong 518052 (CN)
(72) Inventor: JACTAT, Caroline, Shenzhen, Guangdong (CN)
(74) Representative: Simmons & Simmons

(57) **Abstract**

A wireless communications network comprises a plurality of nodes which support integrated wireless access and backhaul between a core network and user equipment (UE). A method of assisting route selection in a wireless communications network comprises receiving, at a first node, an inquiry request relating to a communication path between the core network and a user equipment (UE). The request comprises target quality of service (QoS) information for the communication path. The first node determines if the communication path can be supported and sends a message to the requesting node indicating whether the communication path can be supported by the first node.

## Description

### BACKGROUND OF INVENTION

### Field of Invention

The following disclosure relates to route selection in a wireless communications network.

### Description of Prior Art

In wireless communications networks base stations provide wireless coverage to user equipment (UE). This is called access. In addition, traffic is carried between base stations and a core network, or between base stations in a network using relays. This is called backhaul. The backhaul can use wireless resources. One area of development in wireless communications networks is Integrated Access and Backhaul (IAB). In IAB wireless channel resources are shared between wireless access and wireless backhaul. Another term for IAB is self-backhauling.

3GPP NR (New Radio) technology is defined in TS 38.300 NR and NG-RAN Overall description and TS 38.401 NG-RAN Architecture description. IAB is described in TR 38.874. One factor which allows IAB 3Gpp NR systems are expected to use larger bandwidth availability along with native deployment of massive MIMO or multi-beam systems, NR creates an opportunity to deploy integrated access and backhaul links for providing access to UEs.

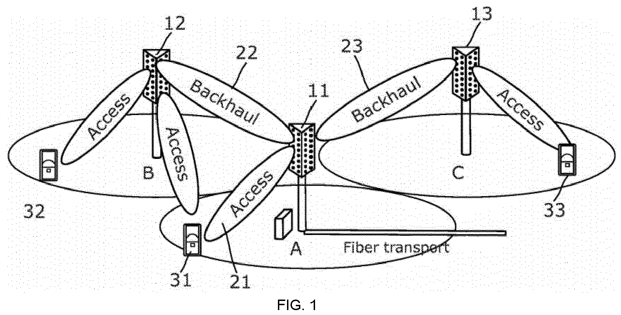

Figure 1 shows an example of a system with integrated access and backhaul links. The system comprises base stations 11, 12, 13. In this example, base stations 11-13 provide access to UEs 31-33. Also, base stations 11-13 support wireless backhaul 22, 23 of traffic. For example, there is a backhaul link 22 between base stations 11 and 12 and a backhaul link 23 between base stations 11 and 23. Base stations 12 and 13 may be called relay nodes as they relay traffic between a node 11 and UEs 31-33. IAB nodes may multiplex access and backhaul links in one or more of time, frequency, and space (e.g. beam-based operation).

IAB nodes may serve as relay nodes and may be designed as low cost and lower power equipment which can be easily and quickly deployed when needed. They may be deployed in several scenarios: in rural areas to enhance the coverage, urban hotspot to enhance the capacity in order to cope with the high user density, indoor hot spots to achieve high data throughput, etc. IAB can allow a dense cell distribution.

There is a requirement for an alternative IAB communications network.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

There is provided a method of assisting route selection in a wireless communications network, the wireless communications network comprising a plurality of nodes which support integrated wireless access and backhaul between a core network and user equipment (UE) , the method comprising at a first node of the network:
receiving an inquiry request relating to a communication path between the core network and a user equipment (UE) , the request comprising target quality of service (QoS) information for the communication path;
determining if the communication path can be supported by the first node; and
sending a message to the requesting node indicating whether the communication path can be supported by the first node.

Optionally, the target QoS information comprises one or more of: a QoS budget for the communication path; a remaining QoS budget for the communication path; a cumulative total of QoS for a portion of the communication path preceding the first node.

Optionally, the QoS information comprises a value of at least one QoS parameter.

Optionally, the method comprises determining a position of the first node in the communication path and determining if the communication can be supported by the first node for the determined position in the communication path.

Optionally, if it is determined that the communication path can be supported by the first node, the method comprises sending a message to the requesting node indicating that the communication path can be supported by the first node, the message comprising node position information of the first node.

Optionally, if it is determined that the communication path can be supported by the first node, the method comprises sending a message to the requesting node indicating that the communication path can be supported by the first node, the message comprising an address or an identifier of the first node.

Optionally, if it is determined that the communication path can be supported by the first node, the method comprises sending a request to support the communication path to at least one other node of the network, the request comprising target QoS information.

Optionally, the request sent to the at least one other node comprises an updated target QoS information based on the target QoS information and a QoS property of the first node.

Optionally, the method comprises receiving a reply from the at least one other node and forwarding the reply to the requesting node.

Optionally, the method comprises using information carried by the reply from the at least one other node before forwarding the reply to the requesting node.

Optionally, the method comprises using wireless resource information carried by the reply.

Optionally, if it is determined that the communication path cannot be supported by the first node, the method comprises sending a reply or a notification to the requesting node indicating that the communication path cannot be supported by the first node.

Optionally, the method comprises determining if the communication path can be supported by the first node comprises using data stored at the first node.

Optionally, the stored data is statistical information.

Optionally, the request comprises node position information.

Optionally, the request comprises node position information of the node sending the request.

Optionally, determining a position of the first node comprises determining if the request comprises node position information and, if there is no position information, determining the node position as a first node in the communication path after the node which sent the request.

Optionally, the target QoS information comprises a value for at least one of: QFI (QoS Flow Identifier) , packet delay budget (PDB) ; packet error rate (PER) ; guaranteed flow bit rate (GFBR) ; maximum flow bit rate (MFBR) ; maximum packet loss rate.

Optionally, the QoS information relates to at least one of: a UE, a Data Radio Bearer, a PDU session.

There is provided a method of assisting route selection in a wireless communications network, the wireless communications network comprising a plurality of nodes which support integrated wireless access and backhaul between a core network and user equipment (UE) , the method comprising at a first node of the network:
sending an inquiry request relating to a communication path between the core network and a user equipment (UE) , the request comprising target quality of service (QoS) information for the communication path, wherein the inquiry request is sent to a plurality of nodes;
receiving messages from the plurality of nodes indicating whether the communication path can be supported by the plurality of nodes; and
using the received messages from nodes which indicate that the communication path can be supported to select a route for the communication path.

Optionally, the received messages comprise messages received from nodes which are positioned one hop from the first node and messages received from nodes which are positioned two hops from the first node.

Optionally, the method comprises configuring the selected route.

Optionally, the method comprises:
selecting a first route for the communication path and configuring the first route;
selecting a second route for the communication path and configuring the second route.

There is provided apparatus configured to perform the method according to any one of the preceding claims.

There is provided a method of configuring communication routes in a wireless communications network, the wireless communications network comprising a plurality of nodes which support integrated wireless access and backhaul between a core network and user equipment (UE) , the method comprising:
configuring a first communication route with a first target quality of service (QoS);
configuring a second communication route with a second target quality of service (QoS) .

Optionally, the method comprises configuring a threshold for switching traffic from the first communication route to the second communication route.

Optionally, the threshold is a threshold for sending a notification to another node of the network.

Optionally, there is a first node which is common to the first communication route and the second communication route, and the threshold is a threshold for autonomously switching at the first node.

Optionally, traffic is carried by protocol data units, and the method comprises sending, with a protocol data unit, information indicating which of the configured communication routes the protocol data unit is to follow.

Optionally, the method comprises sending, with a protocol data unit, information indicating a plurality of the configured communication routes.

The term "Integrated Access and Backhaul" refers to wireless (radio) channel resources which are shared between wireless access and wireless backhaul.

An example of the disclosure has an advantage of determining a route for a communication path which meets a required QoS. The route may comprise multiple hops.

An example of the disclosure relates to assistance information to route selection and QoS support for a mobile device communication to core network through multi-hop relay backhauling of the radio access network.

QoS information can relate to a mobile device end-to-end communication such as an established PDU session between the device and the network. The QoS can relate to a backhaul link communication such as a radio bearer between IAB nodes or an IAB node and an IAB donor. Consequently, the method of QoS Topology Inquiry can apply to a PDU session or a radio bearer or a UE.

An advantage of at least one example is providing a way of controlling route selection to achieve QoS requirements.

An advantage of at least one example is that the core network (CN) is not impacted by the radio network topology.

There is also provided apparatus for performing any of the methods described herein.

### BRIEF DESCRIPTION OF DRAWINGS

Further details, aspects and embodiments of the invention will be described, by way of example only, with reference to the drawings. Elements in the figures are illustrated for simplicity and clarity and have not necessarily been drawn to scale. Like reference numerals have been included in the respective drawings to ease understanding.
Figure 1 shows an example of Integrated Access and Backhaul (IAB) communications network;
Figure 2 shows another example of an IAB communications network;
Figure 3 shows an IAB network architecture with an adaptation layer;
Figure 4 shows an IAB network architecture with an IP layer;
Figure 5 shows an example of a method of collecting information to assist route selection;
Figure 6 shows a network topology resulting from information collected using the method of Figure 5;
Figure 7 shows an example of configuring primary and secondary routes;
Figure 8 shows an example of configuring multiple routes;
Figure 9 shows QoS information in a network;
Figure 10 schematically shows example apparatus at a node or a UE.

### DETAILED DESCRIPTION OF THE PREFERRED EMBODIMENTS

Those skilled in the art will recognise and appreciate that the specifics of the examples described are merely illustrative of some embodiments and that the teachings set forth herein are applicable in a variety of alternative settings.

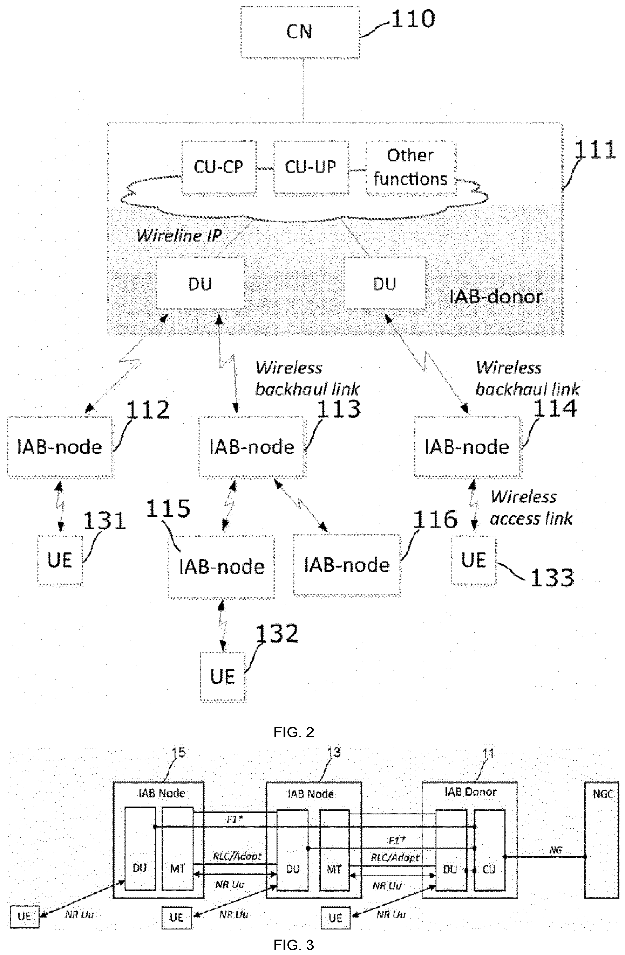

Figure 2 shows an IAB architecture. The system comprises a plurality of wireless or Radio Access Network (RAN) nodes 111-116. Node 111 is called an IAB donor node. The lAB donor node 111 interfaces to the core network (CN) 110 and interfaces to IAB nodes. Nodes 112-116 are called lAB-nodes. Nodes may support access and backhaul links. In Figure 2, IAB donor node 111 is connected to each of lAB-nodes 112, 113, 114 by a respective wireless backhaul link. An IAB-node may serve as a relay node. In Figure 2, each of lAB-nodes 112-116 serves as a relay node. An IAB-node may support backhaul to another lAB-node as well as access to one or more UEs. IAB-node 113 provides backhaul to IAB donor 111 and backhaul to lAB-nodes 115, 116. A UE may be served directly by an access link to IAB donor 111 (not shown) or by an access link to one of the IAB-nodes 112-116.

A plurality of RAN nodes can be involved in a route between a UE and the core network (CN) 110. In Figure 2, UE 131 is connected to the core network CN by a route comprising an access link (UE -IAB-node 112) and a backhaul link (lAB-node 112 -IAB donor 111). In Figure 2, UE 132 is connected to the core network by a route comprising an access link (UE -lAB-node 115), a backhaul link (lAB-node 115 -lAB-node 113) and a backhaul link (IAB-node 113 -IAB donor 111) .

Each of the IAB nodes may multiplex access and backhaul links in one or more of time, frequency, and space (e.g. beam-based operation).

The IAB donor 111 may be treated as a single logical node that comprises a set of functions such as gNB-DU, gNB-CU-CP, gNB-CU-UP and potentially other functions. In a deployment, the IAB donor 111 can be split according to these functions, which can be either be collocated or non-collocated as allowed by the NG-RAN architecture.

An increasing number of RAN nodes involved in the route between the UE and CN may increase a transmission delay. It is desirable that the QoS for a PDU session should meet a target level. In addition, it is desirable that CN functions like mapping of QoS flows to RAN resources should be transparent to the topology of the RAN nodes. For example, it is desirable that the RAN and/or UE is not be updated with new mapping rules in case a RAN node is removed or added onto the route between the UE and the CN due to QoS degradation.

IAB may reuse existing functions and interfaces defined for access.

To address an issue of QoS handling in a network with multiple RAN nodes, TR 38.874 proposes to include the information below in the adaptation layer header of architecture group 1: In particular, Mobile-Termination (MT) , gNB-DU, gNB-CU, UPF, AMF and SMF functions as well as the corresponding interfaces NR Uu (between MT and gNB), F1 (between two IAB nodes or between an IAB node and an lAB donor), NG, X2 and N4 as defined in TS 38.300 or TS 38.401 are used as baseline for the IAB architectures.

The Mobile-Termination (MT) function has been defined a component of the Mobile Equipment. MT is referred to as a function residing on an lAB-node that terminates the radio interface layers of the backhaul Uu interface towards the IAB donor or other lAB-nodes.

Two IAB architecture groups to accomplish multi-hop forwarding are considered depending on whether backhauling uses a "RLC/Adapt" adaptation layer in proximity to RLC (group 1) or IP based layer (group 2). Group 1 based architectures have an advantage of reduced latency compared to Group 2 based architectures as less layers are involved during relaying operations. Group 1 has more standard specifications impacts than group 2 due to the adaptation layer.

An example of architecture using the "RLC/Adapt" adaptation layer so called "Architecture 1a" is shown in Figure 3. In this architecture, each IAB node has DU and MT functionality. Via the MT, the IAB-node connects to an upstream IAB-node or the IAB donor. Via the DU, the IAB-node establishes RLC-channels to UEs and to MTs of downstream lAB-nodes.

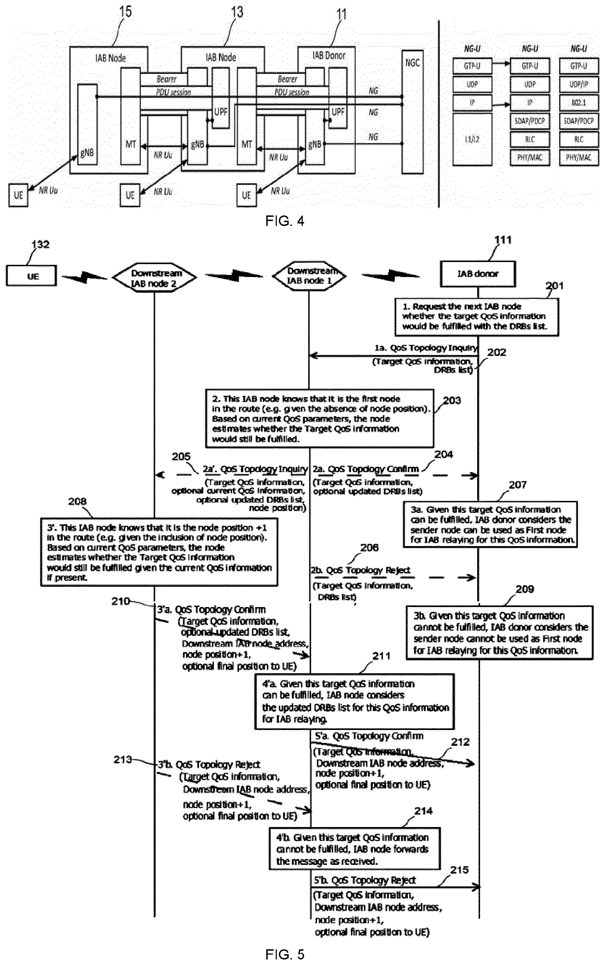

An example of architecture using the IP based layer so called "Architecture 2a" is shown in Figure 4. In this architecture, the IAB-node has MT functionality to establish an NR Uu link with a gNB on the parent lAB-node or IAB donor. Via this NR-Uu link, the MT functionality sustains a PDU-session with a UPF that is collocated with the gNB. In this manner, an independent PDU-session is created on every backhaul link. Each lAB-node further supports a routing function to forward data between PDU-sessions of adjacent links. This creates a forwarding plane across the wireless backhaul. Based on PDU-session type, this forwarding plane supports IP or Ethernet. In case PDU-session type is Ethernet, an IP layer can be established on top. In this manner, each lAB-node obtains IP-connectivity to the wireline backhaul network.

To address the earlier problem of QoS handling in the multiple RAN nodes case, TR 38.874 proposes to include the information below in the adaptation layer of architecture group 1:
- UE-bearer-specific Id
- UE-specific Id
- lAB-node or IAB donor address
- QoS information
- Potentially other information

Details of the information carried in the adaptation layer are yet to be defined.

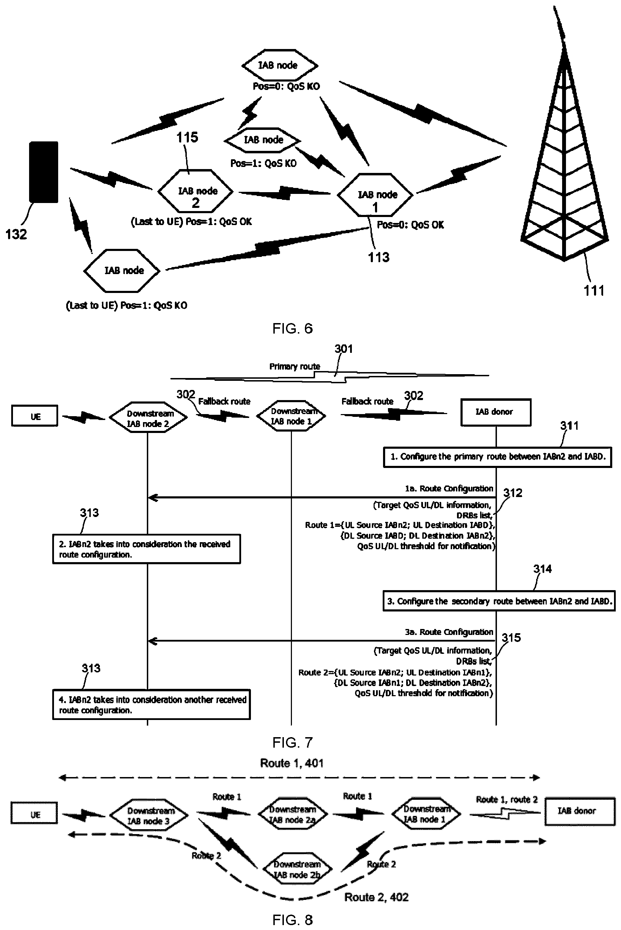

Figure 5 shows an example of a method of assisting route selection. The method collects information about which nodes can support a communication path. The method collects information about a topology of the network. Figure 6 shows an example of a topology established using the method of Figure 5.

The IAB donor node 111 has a direct connection with IAB node 1, 113. IAB node 1 has a direct connection with IAB node 2. There is no direct connection between the IAB donor node 111 and IAB node 2. QoS topology requests from the IAB donor node to IAB node 2 have to transit via IAB node 1. There is a direct connection between UE 132 and IAB node 2, 115.

The method of Figure 5 determines a route between IAB donor 111 and a UE 132 which supports a target QoS. In this example, QoS is defined as a value of Packet Delay Budget (PDB). It will be understood that PDB is one possible parameter to define QoS. More generally, QoS may be defined by one or more QoS parameters.

The method begins at Step 1, 201. The IAB donor node 111 formats and sends in Step 1a, 202, a QoS Topology inquiry request to the first hop downstream IAB nodes. There may be one first hop downstream IAB node, or a plurality of first hop downstream IAB nodes. The QoS Topology inquiry request may be sent to all nodes within range of the IAB donor. All nodes which receive the QoS Topology inquiry request may process the request and send a reply. Alternatively, the QoS Topology inquiry request may be sent to a sub-set of the first hop downstream IAB nodes. The inquiry request comprises target QoS information, such as a value of PDB. For example, the QoS Topology inquiry request may indicate a target PDB = 10ms. The inquiry request comprises a corresponding Data Radio Bearer (DRB) list mapping this QoS requirement as provided by the CN. Figure 5 shows the response from a single IAB node. However, it will be understood that a plurality of IAB nodes may send a response to the IAB donor 111. Each of the responses will indicate that the target QoS can be supported (QoS Topology Confirm) by that IAB node, or that the target QoS cannot be supported (QoS Topology Reject) by that IAB node.

At Step 2, 203, IAB node 1 receives the QoS Topology inquiry request. IAB node 1 determines if it can support a communication path based on QoS information in the request. IAB node 1 estimates whetherthe target QoS can be met based on the DRBs resource mapping. IAB node 1 may use stored statistics related to this PDB value. For example, based on such statistics, it can know that the time between an inbound packet from IAB donor up to outbound to next hop is 4ms. As the target PDB has not been entirely consumed by the node, the target PDB can be met.

If the target QoS can be met then, at Step 2a, 204, IAB node 1 informs the IAB donor 111 that the target QoS can be fulfilled. The reply sent at Step 2a comprises an address or some other identifier of the IAB node 1, so the IAB donor 111 can identify the replying node. The reply sent at Step 2a may comprise an updated list of DRBs, based on resources to be used by the requested path. The reply sent at Step 2a may comprise QoS information, e.g. a value of at least one QoS parameter. The QoS information may indicate the effect of IAB node 1 on the QoS budget. For example, if IAB node 1 incurs a PDB of 4ms, the QoS information sent at step 2a may indicate that PDB value, or a remaining QoS budget after subtracting that value.

At Step 2' a, 205, IAB node 1 sends an QoS Topology inquiry request message to the next node. This can comprise forwarding the QoS Topology inquiry request with the original target QoS value (as received from IAB donor 111) and/or a current target QoS value. For example, if the IAB donor sets a target PDB of 10ms, and IAB node 1 has a delay of 4ms, the QoS Topology inquiry request sent at 205 may indicate the remaining PDB = Target (10ms) - estimated PDB at node 1 (4ms) ) = 6ms.

The QoS Inquiry Request may comprise cumulative QoS information, or an indication of a value of QoS parameter (s) to meet the target QoS set by the IAB donor. For example, consider the IAB donor sets a target QoS of PDB=10ms. After passing through a scheduler of the first IAB node, the first IAB node has consumed 2ms of the overall target PDB. The remaining PDB for the next downstream node 2 is PDB=8ms (10ms -2ms) which can be called "target QoS information" . This target QoS information can be forwarded to a next node. In this same example, it is possible to define a current or cumulative (consumed) QoS of PDB=2ms. In some cases it may not be possible to provide a current or cumulative QoS value due to proprietary information. An IAB node may use node position (position in a multi-hop chain of nodes) to estimate current or cumulative QoS, assuming typical scheduler behaviour of a node consumes PDB=2ms. For example, if a node is at a third position in a chain of nodes, it knows that two upstream (or downstream) nodes have been passed through. Therefore, the current or cumulative QoS is estimated as 3 ∗ 2ms=6ms.

If the target QoS cannot be met then, at Step 2b, 206, IAB node 1 informs the IAB donor 111 that the QoS cannot be fulfilled. The reply can comprise a QoS Topology Reject message 206. The reply sent at Step 2b comprises an address or some other identifier of the IAB node 1, so the IAB donor 111 can identify the replying node.

At Step 3, 208, upon receipt of the QoS Topology Inquiry message 205 from IAB node 1, IAB node 2 estimates whether the QoS can be met. IAB node 2 may determine whether it can support the communication based on one of more of: DRBs resource mapping at that node, optional (up to scheduler decision) current (remaining) PDB and the node position. The QoS Topology Inquiry message 205 may indicate node position. Based on the indicated node position, IAB node 2 determines that it is at the indicated node position + 1, i.e. two hops from the IAB donor 111.

IAB node 2 may operate in the same, or similar, manner as IAB node 1. IAB node 2 can used stored statistics related to the indicated PDB value. For example, based on such statistics, it can know that the time between an inbound packet from IAB donor up to outbound to next hop is 3ms. As the target PDB has not been entirely consumed by the node (6ms+3ms < 10ms), the PDB can be met.

If the target QoS can be met then, at Step 3' a, 210, IAB node 2 informs IAB node 1 that the target QoS can be fulfilled. The reply sent at Step 3' a comprises an address, or some other identifier of the IAB node 2, so that other nodes can identify the replying node. The reply sent at Step 3' a may comprise an updated list of DRBs, based on resources to be used by the requested path. The reply sent at Step 3' a may comprise QoS information, e.g. a value of at least one QoS parameter. The QoS information may indicate the effect of IAB node 2 on the QoS budget. For example, if IAB node 2 incurs a PDB of 2ms, the QoS information sent at step 3' a may indicate that value, a remaining QoS budget after subtracting that value, or a cumulative total of the effect of IAB node 2 and preceding nodes along the path.

At step 4' a, 211, IAB node 1 receives the QoS Topology Confirm message indicating that the route can be supported. IAB node 1 considers the DRBs list. At step 5' a, 212, IAB node 1 sends the QoS Topology Confirm message to the IAB donor.

If the target QoS cannot be met then, at Step 3' b, 213, IAB node 2 informs IAB node 1 that the target QoS cannot be fulfilled by sending a QoS Topology Reject message. At step 4' b, 214, IAB node 1 receives the QoS Topology Reject message indicating that the route cannot be supported. At step 5' b, 215, IAB node 1 sends the QoS Topology Reject message to the IAB donor.

In this example IAB Node 2 is the final node before the UE. In other examples there may be one or more additional hops before reaching the UE. For additional hops, the method proceeds in the same manner as described above.

After performing the method of Figure 5, the IAB donor knows whether a route is possible between the IAB donor and a UE, which meets a target QoS. The IAB donor can then configure the route. Especially, it allows the radio access network to be aware whether each node is able to fulfill a given QoS requirement if it is placed at a certain position of a route between it and a UE. As such, the RAN is able to derive the optimal route satisfying some QoS requirements for a UE.

The method may be applied for a new communication path, or when there is a need to find a new path because the current path is no longer able to support a requested QoS.

The QoS Topology Inquiry message may indicate a QoS target for: downstream direction only; upstream direction only; downstream direction and upstream direction. The QoS target can be different for each direction. An IAB node may determine if the node can support a communication path which meets the downstream QoS target, and determine if the node can support a communication path which meets the upstream QoS target.

Figure 6 shows an example of a topology established using the method of Figure 5. Two nodes have the downstream first position (Pos=0) after the IAB donor 111. Only one of these nodes (Pos=0: QoS OK, 113) can satisfy the QoS requirements if it is at the first position of a route towards the UE. Three nodes have the downstream second position (Pos=1) after the IAB donor 111. Only one of these nodes ( (Last to UE) Pos=1: QoS OK, 115) can satisfy the same QoS requirements if it is at the second position of a route towards the UE. Node 115 is the final node towards the UE. In the above method, node 113 is selected as IAB node 1 and node 115 as IAB node 2. The method of Figure 5 will consider other nodes (and/or other combinations of nodes), but these may not meet the target QoS requirements.

Based on the topology resulting from the method of Figure 5, the network has selected the route with IAB node 1, 113 and IAB node 2, 115 towards the UE to satisfy the target QoS requirement.

In this method, the IAB node (s) can maximise (and update, if necessary) the radio resources assignment to meet the QoS requirements, taking into consideration the potential position of the IAB node on the route. For example, if the IAB node is at the n th position, then it is likely that the n-1 other upstream node (s) have already consumed n-1 parts of the QoS requirements assuming the performance of schedulers of the radio nodes are nearly equivalent. The IAB node can provide the remaining QoS requirements towards the next downstream IAB node. For example, consider that the sender of the QoS Topology Inquiry proposes to use the radio resources related to DRB identities 1 and 5 to fulfil some QoS requirements (e.g. PDB=10ms). A node receiving the Topology Inquiry may determine, based on statistics related to these DRB identities, that a QoS of PDB=15ms is possible. Hence, the target QoS of PDB=10ms is not met. However, the node determines that the target QoS of PDB=10ms could be met with DRBI 2. Therefore, the node can propose to update the radio resources list mapping to DRB identity 2 (DRBI 2) instead of DRBI 1 and 5. The node includes DRBI 2 in the Confirmation message. If the node determines that none of the DRBI fulfils the target QoS of PDB=10ms, then the Reject message is sent back to the sender of the QoS Topology Inquiry.

Consider a case where the node is not the first node (nth position is indicated) in receiving the QoS Topology Inquiry. Based on stored statistics the IAB node determines PDB=7ms. The target QoS to meet is 10ms. If the node was a first hop node, it would be possible to meet the target QoS of 10ms. However, if the node is a second hop node then extrapolated PDB is doubled (2 * 7ms), giving a total PDB of 14ms. Therefore, at this position the target QoS is not met and the IAB node at position 2 would provide Reject message. Whenever an IAB node sends a Confirmation/Reject message, it includes its address so the IAB donor in charge of route selection, knows which IAB node can fulfil which QoS requirements and at which position.

The method of Figure 5 begins at the IAB donor. It is also possible to begin at a different node, such as an IAB node nearest to the UE to be served.

As elaborated below, it is possible to configure a plurality of routes. Optionally, the network may switch between the routes based on a QoS threshold.

Figure 7 shows an example of a method of configuring a primary route 301 and a secondary route 302 between IAB donor and a UE. The primary route 301 may be an optimal route and the secondary route 302 may be a fallback route. The routes 301, 302 can be determined using the method described above.

In this example, the IAB donor has a direct connection with IAB node 1. IAB node 2 has a direct connection with IAB node 2. There is also a direct connection between IAB donor and IAB node 2. The primary route 301 is a direct route between IAB donor and IAB node 2. The fallback route 302 is a route IAB donor-lAB node 1 -IAB node 2. Both routes 301, 302 meet the QoS requirements. The fallback route may be used in case of congestion incurred by IAB node 1 on the primary route. The configuration of the IAB donor -IAB node 1 hop as part of the fallback route can be mimicked from that of IAB node 2 -IAB donor hop (i.e. Step 3a). The Route configuration for the fallback route from IAB donor to IAB node 1 includes the parameters as provided in step 1a from IAB donor to IAB node 2. However, their values are different. In the fallback route between IAB donor and IABn1, the UL source entity is IABn1, the UL destination entity is IAB donor; the DL source entity is IAB donor, the DL destination is IABn1.

At Step 1, 311, the IAB donor configures the primary route directly between the IAB donor and IAB node 2. At Step 1a, 312, the IAB donor sends a Route Configuration message. The Route Configuration message comprises a route identifier 1 for the route between IAB donor and IAB node 2. The Route Configuration message comprises source node and destination nodes (e.g. in the form of identifiers or addresses) for uplink and/or downlink transmissions. The Route Configuration message can indicate respective target QoS information for each direction. The Route Configuration message can indicate mapping of DRBs, which can be different for each direction. The Route Configuration message may indicate a QoS threshold. For example, the QoS threshold may be set at 80%of target QoS. Taking the same target QoS of PDB = 10ms as described above, the QoS threshold may be set at 8ms. The QoS threshold may be used as a trigger in anticipation of service degradation or outage.

The QoS trigger may be used to trigger route reconfiguration by the IAB donor. Let us take the example of PDB of Figure 2 where target PDB is 10ms, consumed PDB by IABn2 is 3ms, consumed PDB by IABn1 is 4ms, all this information is known by the IAB donor as per being provided during QoS sounding step as illustrated by Figure 2. By configuring 80%towards IABn2 for the primary route, IABn2 would trigger notification towards IAB donor in case its consumed PDB would reach 8ms (80%of 10ms target PDB) along the primary route out of 10ms, so IAB donor might trigger route reconfiguration to e.g. secondary route where better QoS can be achieved (lower PDB 7ms (consumed PDB by IABn2 is 3ms + consumed PDB by IABn1 is 4ms) ) in case a secondary route has not been configured. if no threshold is configured because there is only one route configured, then there can be a congestion or load situation at the node or an internal node implementation mechanism such as threshold, to trigger notification towards IAB donor in case QoS is about not to be fulfilled or is not fulfilled anymore. So the IAB donor might trigger route reconfiguration.

At Step 2, 313, the IAB node 2 receives the configuration and considers it as the primary route for the UE.

At Step 3, 314, the IAB donor configures the secondary route. The secondary route can be used in case the QoS on the primary route is not fulfilled. At Step 3a, the IAB donor includes route identifier 2 between IAB node 2 and IAB node 1, for which source node and destination nodes (in the form of identifiers or addresses) are included for uplink and downlink transmissions.

The Route Configuration message can indicate respective target QoS information for each direction. The Route Configuration message can indicate mapping of DRBs, which can be different for each direction. The Route Configuration message may indicate a QoS threshold. A QoS threshold (e.g. 50%ratio of target QoS, absolute value (5ms PDB) ) for uplink and/or downlink may be included to trigger route reconfiguration by the IAB donor to anticipate QoS outage. Let us take the example of PDB where target PDB is 10ms, consumed PDB by IABn2 is 3ms, consumed PDB by IABn1 is 4ms, all this information is known by the IAB donor as per being provided during QoS sounding method as illustrated by Figure 5. By configuring 50%towards IABn2 for the secondary route, IABn2 would trigger notification towards IAB donor in case its consumed PDB reaches 5ms (50%of 10ms target PDB), thus implying total PDB along the secondary route reaches 9ms out of 10ms, so the IAB donor might trigger route reconfiguration to e.g. primary route where better QoS can be achieved (lower PDB).

At Step 4, 313, the IAB node 2 receives the configuration and considers it as the secondary route for the UE.

After a route has been configured at an IAB node, the IAB node can notify the IAB donor when QoS reaches the configured threshold QoS value. The lAB node can notify the IAB donor when an outage occurs. An IAB node may use the QoS threshold to trigger a switch from one configured route to another configured route. The switching may occur autonomously. IAB nodes may notify the IAB donor only if none of the configured routes fulfill the target QoS.

It is possible for the IAB donor to provide more than one route configuration at the same time. Referring again to Figure 7, configurations as per Step 1a, 312, and Step 3a, 315, can be achieved in the same route configuration message.

Figure 8 shows an example of a communications network with two configured routes: Route 1, 401; Route 2, 402. Route 1 has the routing: IAB donor-lAB node 1 -IAB node 2a -IAB node 3 -UE. Route 2 has the routing: IAB donor-lAB node 1 -IAB node 2b -IAB node 3 -UE. More than one route can be used at a time between the IAB donor and the UE. That is - both of the routes (Route 1, Route 2) can be used in parallel. Route information is provided along with a data transmission. This instructs nodes along those routes how to forward the data packets. The multiple routes allow for higher reliability due to redundancy of the transmission. More than one route can be included in the header part of the data packet. In the example, in the downlink transmission, IAB donor includes route 1 and route 2 in the transmitted data packet. Then IAB node 1 infers it has to forward the packet along two routes to IAB nodes 2a and 2b.

The multiple routes are configured to address an outage situation at an IAB node along a route to allow for redundancy and therefore provide more reliability to the transmission. The indication of route (s) along with the data packet can allow for a more dynamic route configuration that could supersede the ongoing semi-statically configured route as in Figure 7 at the time of data transmission while minimising the transmission overhead.

### QoS

The above description refers to setting a target QoS for traffic. A model for QoS for NR networks is defined in TS 23.501. The model is based on QoS Flows which support both QoS Flows that require guaranteed flow bit rate (GBR QoS Flows) and QoS Flows that do not require guaranteed flow bit rate (Non-GBR QoS Flows).

The QoS Flow is the finest granularity of QoS differentiation in the PDU Session. A QoS Flow ID (QFI) is used to identify a QoS Flow in the NR System. User Plane traffic with the same QFI within a PDU Session receives the same traffic forwarding treatment (e.g. scheduling, admission threshold). QFI shall be used for all PDU Session Types. The QFI shall be unique within a PDU Session. The QFI may be dynamically assigned or may be equal to the 5QI, a scalar used as a reference to NR QoS characteristics, i.e. access node-specific parameters that control QoS forwarding treatment for the QoS Flow (e.g. scheduling weights, admission thresholds, queue management thresholds, link layer protocol configuration, etc.).

These characteristics are:
- resource type (GBR, delay critical GBR, non GBR);
- priority level (PL) differentiating QoS flows of the same UE or different UEs;
- packet delay budget (PDB) which is an upper bound for the time that a packet may be delayed between the UE and the UPF;
- packet error rate (PER), an upper bound for the rate of PDUs having been processed by the sender of a link layer protocol but are not successfully delivered by the corresponding receiver to upper layer;
- guaranteed/maximum flow bit rate (GFBR/MFBR) for uplink and downlink for GBR flow, the bit rate that is guaranteed to be provided by the network over the averaging time window where the bit rate is computed;
- notification control for a GBR QoS flow indicating whether notifications are requested from the RAN towards SMF in CN when the GFBR can no longer (or again) be fulfilled for a QoS flow during its lifetime;
- maximum packet loss rate for the QoS flow in the uplink and downlink directions.

For some traffic to comply with QoS requirements, QoS flow mapping is defined by the CN:
- in the downlink, CN provides QFI along with Data Radio Bearers mapping rules to RAN. Then CN marks the packets towards the RAN using a QFI. Based on the QFI, the RAN binds to radio bearer resources according to provided mapping rules;
- in the uplink, UE uses QFI mapping rules provided by the CN to bind to radio bearer resources.

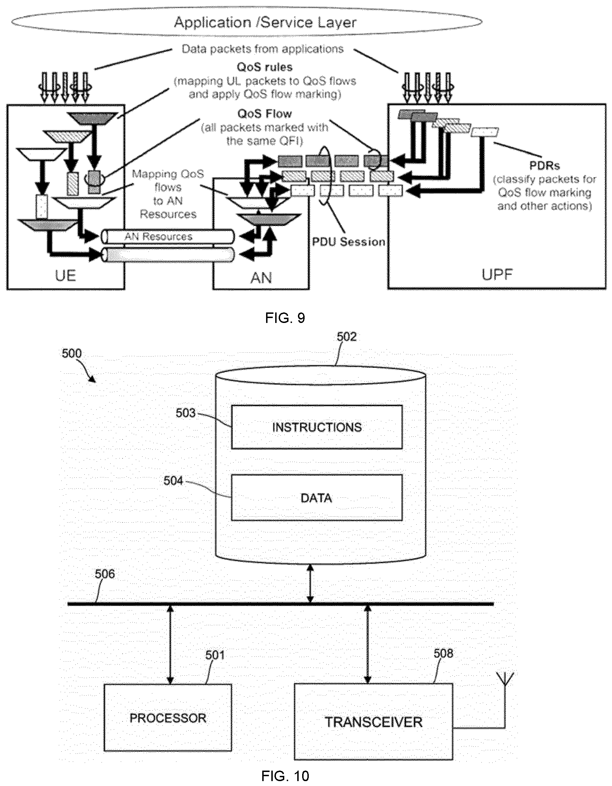

Such principle for classification and User Plane marking for QoS Flows and mapping to AN Resources is illustrated by Figure 9.

However the aforementioned QoS characteristics have been defined for architecture including one RAN node only. When there is a change to the serving RAN node e.g. in case of UE mobility, the serving RAN node provides the QoS information (QoS Flow Level QoS Parameters IE as defined in TS 38.423) to the target RAN node so the target node can further fulfil the QoS requirements for the PDU sessions.

Based on the QFI marker, the RAN is able to derive and store QoS statistics for a DRB or a PDU session. The QoS statistics may be used by the IAB nodes to infer whether a QoS requirement for a UE, a DRB or a PDU can be met at the IAB node position level and by the IAB node to infer such QoS requirement can be met end-to-end given the information provided by the IAB nodes.

Although not shown in detail any of the devices or apparatus that form part of the network may include at least a processor, a storage unit and a communications interface, wherein the processor unit, storage unit, and communications interface are configured to perform the method of any aspect of the present invention.

Figure 10 shows apparatus which can be used to implement one of the nodes (IAB donor, IAB node) and/or a UE. The apparatus which may be implemented as any form of a computing and/or electronic device. Processing apparatus 500 comprises one or more processors 501 which may be microprocessors, controllers or any other suitable type of processors for executing instructions to control the operation of the device. The processor 501 is connected to other components of the device via one or more buses 506. Processor-executable instructions 503 may be provided using any computer-readable media, such as memory 502. The processor-executable instructions 503 can comprise instructions for implementing the functionality of the described methods. The memory 502 is of any suitable type such as read-only memory (ROM), random access memory (RAM), a storage device of any type such as a magnetic or optical storage device. Data 504 used by the processor may be stored in memory 502, or in additional memory. The processing apparatus 500 comprises one or more wireless transceivers 508.

Further options and choices are described below. The signal processing functionality of the embodiments of the invention may be achieved using computing systems or architectures known to those who are skilled in the relevant art. Computing systems such as, a desktop, laptop or notebook computer, hand-held computing device (PDA, cell phone, palmtop, etc. ), mainframe, server, client, or any other type of special or general purpose computing device as may be desirable or appropriate for a given application or environment can be used. The computing system can include one or more processors which can be implemented using a general or special-purpose processing engine such as, for example, a microprocessor, microcontroller or other control module.

The computing system can also include a main memory, such as random access memory (RAM) or other dynamic memory, for storing information and instructions to be executed by a processor. Such a main memory also may be used for storing temporary variables or other intermediate information during execution of instructions to be executed by the processor. The computing system may likewise include a read only memory (ROM) or other static storage device for storing static information and instructions for a processor.

The computing system may also include an information storage system which may include, for example, a media drive and a removable storage interface. The media drive may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media may include, for example, a hard disk, floppy disk, magnetic tape, optical disk, CD or DVD, or other fixed or removable medium that is read by and written to by media drive. The storage media may include a computer-readable storage medium having particular computer software or data stored therein.

In alternative embodiments, an information storage system may include other similar components for allowing computer programs or other instructions or data to be loaded into the computing system. Such components may include, for example, a removable storage unit and an interface, such as a program cartridge and cartridge interface, a removable memory (for example, a flash memory or other removable memory module) and memory slot, and other removable storage units and interfaces that allow software and data to be transferred from the removable storage unit to computing system.

The computing system can also include a communications interface. Such a communications interface can be used to allow software and data to be transferred between a computing system and external devices. Examples of communications interfaces can include a modem, a network interface (such as an Ethernet or other NIC card), a communications port (such as for example, a universal serial bus (USB) port), a PCMCIA slot and card, etc. Software and data transferred via a communications interface are in the form of signals which can be electronic, electromagnetic, and optical or other signals capable of being received by a communications interface medium.

In this document, the terms 'computer program product' , 'computer-readable medium' and the like may be used generally to refer to tangible media such as, for example, a memory, storage device, or storage unit. These and other forms of computer-readable media may store one or more instructions for use by the processor comprising the computer system to cause the processor to perform specified operations. Such instructions, generally 45 referred to as 'computer program code' (which may be grouped in the form of computer programs or other groupings), when executed, enable the computing system to perform functions of embodiments of the present invention. Note that the code may directly cause a processor to perform specified operations, be compiled to do so, and/or be combined with other software, hardware, and/or firmware elements (e.g., libraries for performing standard functions) to do so.

The non-transitory computer readable medium may comprise at least one from a group consisting of: a hard disk, a CD-ROM, an optical storage device, a magnetic storage device, a Read Only Memory, a Programmable Read Only Memory, an Erasable Programmable Read Only Memory, EPROM, an Electrically Erasable Programmable Read Only Memory and a Flash memory. In an embodiment where the elements are implemented using software, the software may be stored in a computer-readable medium and loaded into computing system using, for example, removable storage drive. A control module (in this example, software instructions or executable computer program code), when executed by the processor in the computer system, causes a processor to perform the functions of the invention as described herein.

Furthermore, the inventive concept can be applied to any circuit for performing signal processing functionality within a network element. It is further envisaged that, for example, a semiconductor manufacturer may employ the inventive concept in a design of a stand-alone device, such as a microcontroller of a digital signal processor (DSP), or application-specific integrated circuit (ASIC) and/or any other sub-system element.

It will be appreciated that, for clarity purposes, the above description has described embodiments of the invention with reference to a single processing logic. However, the inventive concept may equally be implemented by way of a plurality of different functional units and processors to provide the signal processing functionality. Thus, references to specific functional units are only to be seen as references to suitable means for providing the described functionality, rather than indicative of a strict logical or physical structure or organisation.

Aspects of the invention may be implemented in any suitable form including hardware, software, firmware or any combination of these. The invention may optionally be implemented, at least partly, as computer software running on one or more data processors and/or digital signal processors or configurable module components such as FPGA devices.

Thus, the elements and components of an embodiment of the invention may be physically, functionally and logically implemented in any suitable way. Indeed, the functionality may be implemented in a single unit, in a plurality of units or as part of other functional units. Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an' , 'first' , 'second' , etc. do not preclude a plurality.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term 'comprising' or "including" does not exclude the presence of other elements.

## Claims

1. A method of assisting route selection in a wireless communications network, the wireless communications network comprising a plurality of nodes which support integrated wireless access and backhaul between a core network and user equipment, UE, **characterized in that**, the method comprising at a first node of the network:
receiving an inquiry request relating to a communication path between the core network and a user equipment, UE, the request comprising target quality of service, QoS, information for the communication path;
determining if the communication path can be supported by the first node; and
sending a message to the requesting node indicating whether the communication path can be supported by the first node.

2. A method according to claim 1 wherein the target QoS information comprises one or more of:
a QoS budget for the communication path;
a remaining QoS budget for the communication path;
a cumulative total of QoS for a portion of the communication path preceding the first node.

3. A method according to claim 1 or 2 wherein the QoS information comprises a value of at least one QoS parameter.

4. A method according to any one of the preceding claims comprising
determining a position of the first node in the communication path and determining if the communication can be supported by the first node for the determined position in the communication path.

5. A method according to any one of the preceding claims wherein, if it is determined that the communication path can be supported by the first node, sending a message to the requesting node indicating that the communication path can be supported by the first node, the message comprising node position information of the first node.

6. A method according to any one of the preceding claims wherein, if it is determined that the communication path can be supported by the first node, sending a message to the requesting node indicating that the communication path can be supported by the first node, the message comprising an address or an identifier of the first node.

7. A method according to any one of the preceding claims wherein, if it is determined that the communication path can be supported by the first node, sending a request to support the communication path to at least one other node of the network, the request comprising target QoS information.

8. A method according to any one of the preceding claims wherein the request sent to the at least one other node comprises an updated target QoS information based on the target QoS information and a QoS property of the first node.

9. A method according to claim 7 or 8 comprising
receiving a reply from the at least one other node and forwarding the reply to the requesting node.

10. A method according to claim 9 comprising
using information carried by the reply from the at least one other node before forwarding the reply to the requesting node.

11. A method according to claim 10 comprising
using wireless resource information carried by the reply.

12. A method according to any one of the preceding claims wherein, if it is determined that the communication path cannot be supported by the first node, sending a reply or a notification to the requesting node indicating that the communication path cannot be supported by the first node.

13. A method according to any one of the preceding claims wherein determining if the communication path can be supported by the first node comprises using data stored at the first node.

14. A method according to claim 13 wherein the stored data is statistical information.

15. A method of assisting route selection in a wireless communications network, the wireless communications network comprising
a plurality of nodes which support integrated wireless access and backhaul between a core network and user equipment, UE, the method comprising at a first node of the network:
sending an inquiry request relating to a communication path between the core network and a user equipment, UE, the request comprising target quality of service, QoS, information for the communication path, wherein the inquiry request is sent to a plurality of nodes;
receiving messages from the plurality of nodes indicating whether the communication path can be supported by the plurality of nodes; and
using the received messages from nodes which indicate that the communication path can be supported to select a route for the communication path.
